# EUROPÄISCHE PATENTSCHRIFT

(11) **EP 4 043 115 B1**
(45) Veröffentlichungstag und Bekanntmachung des Hinweises auf die Patenterteilung: **21.08.2024**
(21) Anmeldenummer: 22154682.3
(22) Anmeldetag: 02.02.2022
(51) Int. Cl.: B21D 22/02, B21D 22/20, C21D 1/673, C21D 9/48, B62D 25/04, B21D 35/00, C23C 30/00

(54) **VERFAHREN ZUR HERSTELLUNG EINES PRESSGEHÄRTETEN BLECHFORMTEILS MIT BEREICHSWEISE UNTERSCHIEDLICHEN EIGENSCHAFTEN**
PROCESS FOR FORMING A PRESS-HARDENED SHEET-METAL PART HAVING DIFFERENT PROPERTIES IN DIFFERENT AREAS
PROCÉDÉ DE FORMAGE D'UNE PIÈCE EN TÔLE TREMPÉE À LA PRESSE COMPORTANT DES ZONES AYANT DES PROPRIÉTÉS DIFFÉRENTES

(30) Priorität: 12.02.2021 DE 102021201334
(43) Veröffentlichungstag der Anmeldung: 17.08.2022
(73) Patentinhaber: VOLKSWAGEN AG, 38440 Wolfsburg (DE)
(72) Erfinder: Fandrich, Tobias, 38106 Braunschweig (DE); Kotzian, Mathias, 38446 Wolfsburg (DE)

(56) Entgegenhaltungen:
- WO-A1-2019/245025
- DE-B3- 102017 110 864
- KR-A- 20150 117 585

## Beschreibung

Die Erfindung betrifft ein Verfahren zur Herstellung eines pressgehärteten Blechformteils mit bereichsweise unterschiedlichen Eigenschaften.

Beim Presshärten wird ein presshärtegeeignetes und auf Austenitisierungstemperatur erwärmtes Stahlblechmaterial in einem Presshärtewerkzeug geformt und abschreckgekühlt, wodurch sich bekanntermaßen hohe Festigkeiten erzielen lassen. Als Ausgangsplatinen für das Presshärten können auch sogenannte Tailored Welded Blanks (TWB) verwendet werden. Im Sinne der nachfolgend erläuterten Erfindung ist mit "Tailored Welded Blank" eine aus mehreren (wenigstens zwei) miteinander verschweißten Blechstücken bzw. Teilplatinen gebildete Stahlblechplatine gemeint.

Die Patentschrift KR 2015 0117585 A beschreibt ein Verfahren zur Herstellung eines pressgehärteten Blechformteils aus einer Tailored Welded Blank, welche aus zwei beschichteten Blechstücken gebildet ist, wobei sich die Blechstücke in ihren Stahllegierungen, Blechdicken und Beschichtungsmaterialien voneinander unterscheiden.

Die Patentschrift DE 10 2017 110 864 B3 beschreibt ein Verfahren zum Erzeugen gehärteter Stahlblechbauteile aus miteinander verschweißten Blechen unterschiedlicher Blechdicke und/oder unterschiedlicher Blechmaterialien. Der dickere Bereich kann eine Zink-Eisen-Beschichtung besitzen, während der dünnere Bereich eine Zink-Beschichtung besitzt.

Das Presshärten von Tailored Welded Blanks ist ferner in den Patentschriften EP 2 289 770 A1 und US 2014/0154521 A1 beschrieben.

Mit der Erfindung wird ein neues Verfahren mit den im Patentanspruch 1 genannten Schritten zur Herstellung eines pressgehärteten Blechformteils mit bereichsweise unterschiedlichen Eigenschaften vorgestellt. Zusätzliche Merkmale der Erfindung ergeben sich aus den abhängigen Patentansprüchen, der nachfolgenden Erfindungsbeschreibung (wobei dies ausdrücklich auch Merkmale einschließt, die als "beispielsweise", "bevorzugt", "insbesondere" etc. beschrieben sind) und der Zeichnung.

Das erfindungsgemäße Verfahren zur Herstellung eines pressgehärteten Blechformteils mit partiell bzw. bereichsweise unterschiedlichen Eigenschaften weist folgende Schritte auf:
- Bereitstellen einer (vorgefertigten) Tailored Welded Blank, mit einem ersten Blechstück, welches aus einer ersten (presshärtbaren) Stahllegierung gebildet ist und eine erste metallische Schutzbeschichtung aufweist, und mit einem zweiten Blechstück, welches aus einer zweiten (presshärtbaren) Stahlegierung gebildet ist und eine zweite metallische Schutzbeschichtung aufweist, wobei die metallischen Schutzbeschichtungen unterschiedliche Schichtdicken aufweisen, womit gemeint ist, dass die erste metallische Schutzbeschichtung und die zweite metallische Schutzbeschichtung mit unterschiedlichen Schichtdicken aufgetragen bzw. ausgebildet sind;
- Erwärmen (typischerweise auf eine einheitliche Temperatur > 850°C, sodass eine Austenitisierung erfolgt), Umformen und Presshärten der Tailored Welded Blank (sogenanntes direktes Presshärten, wobei das Umformen und Presshärten im Presshärtewerkzeug erfolgt) oder Umformen, Erwärmen (s. o.) und Presshärten der Tailored Welded Blank (sogenanntes indirektes Presshärten), wodurch ein pressgehärtetes, insbesondere ein vollständig (nicht nur partiell) pressgehärtetes, Blechformteil erzeugt wird, das einen aus dem ersten Blechstück gebildeten (pressgehärteten) ersten Blechformteilbereich und einen aus dem zweiten Blechstück gebildeten (pressgehärteten) zweiten Blechformteilbereich aufweist, wobei sich diese beiden Blechformteilbereiche in ihren Festigkeiten und Korrosionsschutzeigenschaften voneinander unterscheiden, womit gemeint ist, dass der aus dem ersten Blechstück gebildete erste Blechformteilbereich eine andere Festigkeit und Korrosionsschutzeigenschaft aufweist als der aus dem zweiten Blechstück gebildete zweite Blechformteilbereich.

Mit Festigkeit ist insbesondere die durch das Presshärten erzielte Zugfestigkeit des Stahlblechmaterials gemeint. Mit Korrosionsschutzeigenschaft ist insbesondere die durch die jeweilige metallische Schutzbeschichtung erzielte Schutzeigenschaft bzw. Schutzwirkung zur Vermeidung oder Verringerung von Korrosionsschäden am pressgehärteten Stahlblechmaterial gemeint, wobei diese Schutzwirkung mehr oder weniger stark ausgeprägt ist, wie nachfolgend noch näher erläutert.

Das erfindungsgemäße Verfahren ermöglicht neue Wege bei der Gestaltung und Herstellung pressgehärteter Blechformteile mit besonderen Eigenschaften. Mit dem erfindungsgemäßen Verfahren kann bspw. ein pressgehärtetes Blechformteil hergestellt werden, das einen besonders festen bzw. hochfesten Blechformteilbereich mit vergleichsweise geringer Korrosionsschutzwirkung und einen (nur) festen Blechformteilbereich mit vergleichsweise hoher und somit nassbereichtauglicher Korrosionsschutzwirkung aufweist. Durch Einsatz unterschiedlicher Blechdicken (s. u.) gelingt ferner auch eine Gewichtsoptimierung.

Die erste Stahllegierung (des ersten Blechstücks) und die zweite Stahllegierung (des zweiten Blechstücks) sind unterschiedlich, sodass beim Presshärten unterschiedliche Festigkeiten erreicht werden, was insbesondere durch einen unterschiedlichen Kohlenstoffgehalt bzw. -anteil in den Stahllegierungen erreicht wird. Die zweite Stahllegierung unterscheidet sich von der ersten Stahllegierung darin, dass diese beim Presshärten materialbedingt eine höhere Festigkeit ausbildet, sodass (nach dem Presshärten) der zweite Blechformteilbereich eine höhere Festigkeit sowie gegebenenfalls eine geringere Duktilität aufweist als der erste Blechformteilbereich. Es ist vorgesehen, dass der erste (pressgehärtete) Blechformteilbereich eine Festigkeit von ≤ 1650 MPa, insbesondere zwischen 1350 MPa und 1650 MPa, aufweist und dass der zweite (pressgehärtete) Blechformteilbereich eine Festigkeit von ≥ 1750 MPa, insbesondere zwischen 1750 MPa und 2000 MPa, aufweist und somit hochfest ist.

Die zweite metallische Schutzbeschichtung (auf dem zweiten Blechstück) ist dünner ausgebildet als die erste metallische Schutzbeschichtung (auf dem ersten Blechstück). Sowohl die erste metallische Schutzbeschichtung als auch die zweite metallische Schutzbeschichtung sind aus einer zinkhaltigen Legierung, insbesondere aus derselben zinkhaltigen Legierung, gebildet, wobei die erste metallische Schutzbeschichtung bzw. Zinkbeschichtung (vor dem Erwärmen und Presshärten) eine Schichtdicke von ≥ 11 µm und die zweite metallische Schutzbeschichtung bzw. Zinkbeschichtung eine Schichtdicke von ≤ 10 µm, aufweist. Beim Erwärmen steigt der Eisengehalt in der dünneren zweiten metallischen Schutzbeschichtung bzw. Zinkbeschichtung so stark an, dass diese zweite Schutzbeschichtung am pressgehärteten Blechformteil nur eine geringe Korrosionsschutzwirkung bietet. Die dünnere zweite metallische Schutzbeschichtung bzw. Zinkbeschichtung fungiert somit quasi nur als Zunderschutzbeschichtung für das Erwärmen und Presshärten. Durch die geringe Schicht- bzw. Zinkauflagendicke wird jedoch beim Erwärmen und Presshärten die Versprödungsgefahr (Liquid Metal Embrittlement) reduziert, sodass sehr hohe Festigkeiten von bspw. > 1650 MPa (die sonst aufgrund der Versprödungsgefahr nicht möglich sind) erreicht werden können. Beim Erwärmen steigt auch in der dickeren ersten metallischen Schutzbeschichtung bzw. Zinkbeschichtung der Eisengehalt an, dies jedoch nur in einem verhältnismäßig geringen Maße, sodass diese erste metallische Schutzbeschichtung am pressgehärteten Blechformteil eine hohe, insbesondere auch nassbereichtaugliche, Korrosionsschutzwirkung bietet. Die dickere erste metallische Schutzbeschichtung bzw. Zinkbeschichtung fungiert somit quasi als Korrosionsschutzbeschichtung.

Dass sich die Blechformteilbereiche in ihren Korrosionsschutzeigenschaften bzw. in der jeweils erzielten Korrosionsschutzwirkung voneinander unterscheiden ist also insbesondere so zu verstehen, dass nach dem Erwärmen und Presshärten die metallische Schutzbeschichtung des ersten Blechformteilbereichs dicker ausgebildet ist bzw. eine größere Schichtdicke aufweist sowie auch einen geringeren Eisengehalt (womit insbesondere der prozentuale Eisenanteil gemeint ist) aufweist als die metallische Schutzbeschichtung des zweiten Blechformteilbereichs (und umgekehrt).

Beide metallischen Schutzbeschichtungen sind bevorzugt vollflächig und beidseitig, insbesondere durch ein Schmelztauchverfahren oder eventuell auch durch Gasphasenabscheidung (PVD), aufgebracht. (Die metallischen Schutzbeschichtungen werden bevorzugt bereits auf die Blechbänder aufgebracht, aus denen dann die Blechstücke angefertigt werden.)

Bevorzugt weist das erste Blechstück der Welded Tailored Blank eine andere Blechdicke als das zweite Blechstück auf, wobei sich die Blechdicken der Blechstücke insbesondere um wenigstens 0,2 mm unterscheiden. Damit ist gemeint, dass das erste Blechstück eine erste Blechdicke und das zweite Blechstück eine zweite Blechdicke aufweist, wobei sich die erste und zweite Blechdicke voneinander unterscheiden, insbesondere um wenigstens 0,2 mm. Bevorzugt ist das zweite Blechstück, welches insbesondere beim Presshärten eine höhere Festigkeit als das erste Blechstück erreicht, dünner, insbesondere um wenigstens 0,2 mm dünner als das erste Blechstück ausgebildet. Durch die unterschiedlichen Blechdicken gelingt eine belastungsgerechte Gewichtsoptimierung.

Zwischen dem Erwärmen und Presshärten kann ein Zwischenkühlen (auch als Vorkühlen bezeichnet) erfolgen, wobei eine solches Zwischenkühlen insbesondere für das direkte Presshärten (s. o.) vorgesehen ist. Damit ist gemeint, dass das erwärmte und austenitisierte Stahlblechmaterial, insbesondere die erwärmte und austenitisierte Tailored Welded Blank, vor dem Presshärten, also vor dem Einlegen in das Presshärtewerkzeug, zumindest bereichsweise bzw. partiell gekühlt wird, insbesondere auf eine Temperatur ≤ 650°C. Durch das Zwischenkühlen kann die Versprödungsgefahr (s. o.) verringert werden. Das Zwischenkühlen kann aktiv sowohl ein- als auch beidseitig mittels Luftdüsen, Kühlwalzen oder Kühlplatten erfolgen. Bevorzugt ist eine vollständige gleichmäßige Zwischenkühlung vorgesehen. Das Zwischenkühlen kann jedoch auch nur bereichsweise erfolgen, insbesondere nur für das erste Blechstück oder nur für das zweite Blechstück. Außerdem kann vorgesehen sein, dass bereichsweise eine unterschiedliche Zwischenkühlung erfolgt, insbesondere derart, dass das zweite Blechstück auf eine andere Temperatur als erste Blechstück gekühlt wird.

Die Tailored Welded Blank kann durch Aufbringen wenigstens eines zusätzlichen Blechstücks (auch als Patchblech bezeichnet) lokal verstärkt werden, welches dann quasi mit pressgehärtet wird, sodass das pressgehärtete Blechformteil an der betreffenden Stelle bzw. im betreffenden Bereich lokal höheren Festigkeits- und/oder Steifigkeitsanforderungen genügt. Das zusätzliche Blechstück kann an der betreffenden Stelle bzw. im betreffenden Bereich auf die Tailored Welded Blank aufgeschweißt oder auch aufgelötet werden. Grundsätzlich kann ein zusätzliches Blechstück auf dem ersten Blechstück oder auf dem zweiten Blechstück der Tailored Welded Blank angeordnet werden, wobei auch eine überlappende Anordnung möglich ist. Bevorzugt ist vorgesehen, dass ein auf dem ersten Blechstück anzuordnendes zusätzliches Blechstück aus derselben ersten Stahllegierung wie das erste Blechstück gebildet ist und insbesondere auch eine metallische Schutzbeschichtung aufweist, deren Legierungszusammensetzung und/oder Schichtdicke der ersten metallischen Schutzbeschichtung des ersten Blechstücks entspricht. Bevorzugt gilt selbiges analog für ein auf dem zweiten Blechstück anzuordnendes zusätzliches Blechstück. Das Aufbringen wenigstens eines zusätzlichen Blechstücks auf die Tailored Welded Blank kann unmittelbar vor dem Erwärmen und (direkten) Pressehärten erfolgen. Ebenso kann die bereitgestellte (vorgefertigte) Tailored Welded Blank bereits wenigstens ein solches zusätzliches Blechstück aufweisen.

Ein mit dem erfindungsgemäßen Verfahren hergestelltes pressgehärtetes Blechformteil ist aus einer einzelnen Tailored Welded Blank hergestellt und weist einen aus einem ersten Blechstück der Tailored Welded Blank gebildeten ersten Blechformteilbereich sowie einen aus einem zweiten Blechstück der Tailored Welded Blank gebildeten zweiten Blechformteilbereich auf, wobei sich diese beiden Blechformteilbereiche in ihren Festigkeiten und Korrosionsschutzeigenschaften voneinander unterscheiden. Bevorzugt handelt es sich um ein Karosserie- oder Fahrwerkverstärkungsbauteil, insbesondere um eine sogenannte Säulen-Verstärkung für die Karosserieseitenwand. Die Erfindung ermöglicht also die Herstellung eines pressgehärteten Blechformteils aus einer einzelnen Tailored Welded Blank, welches bereichsweise bzw. partiell unterschiedliche Festigkeits- und Korrosionsschutzanforderungen erfüllt.

Die Erfindung wird nachfolgend mit Bezug auf die Zeichnung anhand eines bevorzugten Ausführungsbeispiels näher erläutert.
- Fig. 1: zeigt eine ebene Tailored Welded Blank im Ausgangszustand zur Herstellung eines pressgehärteten Blechformteils.
- Fig. 2: zeigt das aus der Tailored Welded Blank der Fig. 1 hergestellte pressgehärtete Blechformteil.

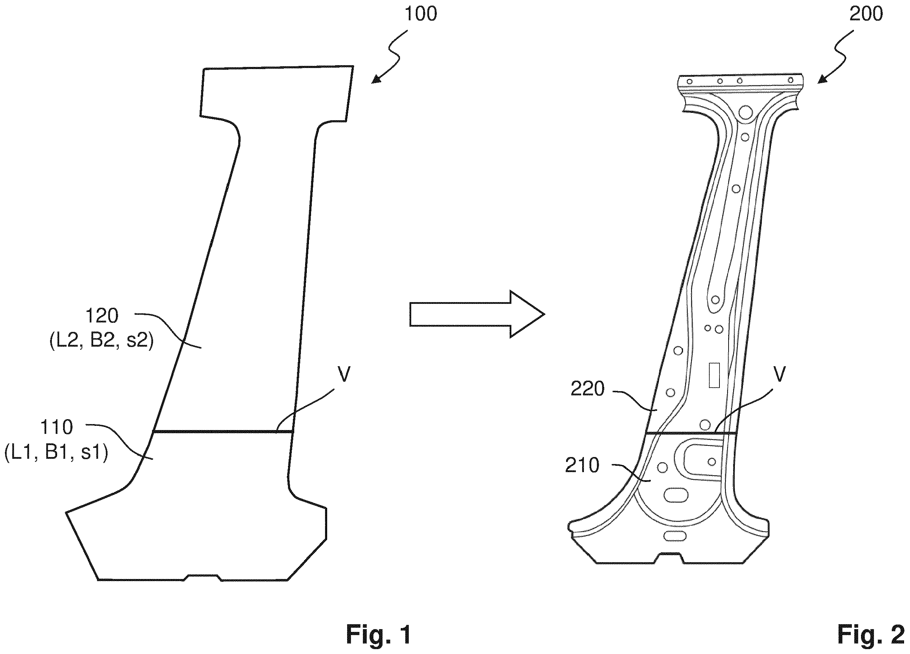

Das in Fig. 2 gezeigte pressgehärtete Blechformteil 200 weist zwei Blechformteilbereiche 210, 220 auf, die durch eine Schweißnaht V verbunden sind. Die Blechformteilbereiche 210, 220 unterscheiden sich in ihren Festigkeiten und Korrosionsschutzeigenschaften. Bei dem Blechformteil 200 handelt es sich um eine Seitenwandsäule (genau genommen um eine B-Säulen-Verstärkung) für eine Kraftfahrzeugkarosserie, wobei der erste Blechformteilbereich 210 den sogenannten Säulenfuß (Fußbereich) bildet und der zweite Blechformteilbereich 220 die Säulenmitte (Mittelbereich) und die Säulendachanbindung (Kopfbereich) bildet.

Das pressgehärtete Blechformteil 200 wird in einem Stück aus der in Fig. 1 gezeigten Tailored Welded Blank 100 hergestellt (wie oben beschrieben). Die Tailored Welded Blank 100 weist ein erstes Blechstück 110 auf, aus dem der erste Blechformteilbereich 210 gebildet wird, und ein zweites Blechstück 120, aus dem der zweite Blechformteilbereich 220 gebildet wird. Die beiden Blechstücke 110, 120 sind entlang einer Schweißnaht V miteinander verschweißt.

Das erste Blechstück 110 ist aus einer ersten Stahllegierung L1 (bspw. 22 MnB5) gebildet und weist eine erste metallische Schutzbeschichtung B1 auf, wobei es sich insbesondere um eine zinkhaltige Legierung handelt. Das zweite Blechstück 120 ist aus einer zweiten Stahllegierung L2 (bspw. 34MnB5) gebildet und weist eine zweite metallische Schutzbeschichtung B2 auf, wobei es sich auch hierbei insbesondere um eine zinkhaltige Legierung handelt. Außerdem ist das zweite Blechstück 120 dünner ausgebildet ist als das erste Blechstück 110, d. h, die (homogene) Blechdicke s1 des ersten Blechstücks 110 ist größer als die (homogene) Blechdicke s2 des zweiten Blechstücks 120. (Die Blechdicke s1 beträgt bspw. 1,8 mm bis 3,0 mm und die Blechdicke s2 bspw. 1,5 mm bis 2,5 mm.) Beim Presshärten bleiben diese Blechdicken im Wesentlichen erhalten.

Die zweite Stahllegierung L2 unterscheidet sich zur ersten Stahllegierung L1 zumindest darin, dass diese beim Presshärten eine höhere Festigkeit ausbildet, sodass (nach dem Presshärten) der zweite Blechformteilbereich 220 eine höhere Festigkeit aufweist (≥ 1750 MPa) als der erste Blechformteilbereich 210 (≤ 1650 MPa), wobei umgekehrt der erste Blechformteilbereich 210 eine höhere Duktilität als der zweite Blechformteilbereich 220 aufweist. Durch die unterschiedlichen Festigkeits- und Duktilitätseigenschaften gelingt eine belastungsgerechte Auslegung des Blechformteils bzw. der Seitenwandsäule 200, insbesondere in Hinblick auf das Crashverhalten.

Ferner ist vorgesehen, dass die erste metallische Schutzbeschichtung B1 des ersten Blechstücks 110 dicker ausgebildet ist als die zweite metallische Schutzbeschichtung B2 des zweiten Blechstücks 120, weshalb sich die metallischen Schutzbeschichtungen B1 und B2 beim Erwärmen und Presshärten unterschiedlich verhalten und verändern. Die zweite metallische Schutzbeschichtung B2 ist bevorzugt so dünn ausgebildet (mit einer Schichtdicke ≤ 10 µm), dass diese beim Erwärmen und Presshärten lediglich als Zunderschutzbeschichtung fungiert (wie oben beschrieben), sodass dann (nach dem Erwärmen und Presshärten) die Korrosionsschutzwirkung im zweiten Blechformteilbereich 220 eher gering bzw. geringer ist (insbesondere im Vergleich zur Korrosionsschutzwirkung im ersten Blechformteilbereich 210). Hingegen ist die erste metallische Schutzbeschichtung B1 bevorzugt so dick ausgebildet (mit einer Schichtdicke ≥ 11 µm), dass nach dem Erwärmen und Presshärten im ersten Blechformteilbereich 210 eine hohe bzw. höhere Korrosionsschutzwirkung erreicht wird (insbesondere im Vergleich zur Korrosionsschutzwirkung im zweiten Blechformteilbereich 220), sodass dieser Blechformteilbereich 210 bspw. auch in einer sogenannten Nasszone (Nassbereich) eingesetzt werden kann.

Die dünne metallische Schutzbeschichtung B2 des zweiten Blechstücks 120 verringert außerdem die Versprödungsgefahr. Eine dickere metallische Schutzbeschichtung des zweiten Blechstücks 120 (bspw. wie auf dem ersten Blechstück 110) würde eine Versprödung des besonders festen bzw. hochfesten zweiten Blechformteilbereichs 220 begünstigen. So gesehen wird zur Verringerung der Versprödungsgefahr bzw. zur Vermeidung einer Versprödung des zweiten (hochfesten) Blechformteilbereichs 220 bewusst eine niedrigere Korrosionsschutzwirkung in Kauf genommen. Für den beschriebenen Anwendungsfall (Seitenwandsäule bzw. Säulen-Verstärkung) ist dies hinnehmbar, da sich der zweite Blechformteilbereich 220 (im Gegensatz zum ersten Blechformteilbereich 210) nicht in einer Nasszone befindet, sondern in einer Zone mit geringerer Korrosionsschutzanforderung. Die Erfindung ermöglicht also auch eine Anpassung an unterschiedliche Korrosionsschutzanforderungen.

### Bezugszeichenliste

- 100: Tailored Welded Blank
- 110: erstes Blechstück (erste Teilplatine)
- 120: zweites Blechstück (zweite Teilplatine)
- 200: pressgehärtetes Blechformteil
- 210: erster Blechformteilbereich
- 220: zweiter Blechformteilbereich
- B1: erste metallische Schutzbeschichtung
- B2: zweite metallische Schutzbeschichtung
- L1: erste Stahllegierung
- L2: zweite Stahllegierung
- s1: Blechdicke
- s2: Blechdicke
- V: Schweißnaht

## Patentansprüche

1. Verfahren zur Herstellung eines pressgehärteten Blechformteils (200) mit bereichsweise unterschiedlichen Eigenschaften, umfassend die Schritte:
- Bereitstellen einer Tailored Welded Blank (100), mit einem ersten Blechstück (110), welches aus einer ersten Stahllegierung (L1) gebildet ist und eine erste metallische Schutzbeschichtung (B1) aufweist, und mit einem zweiten Blechstück (120), welches aus einer zweiten Stahllegierung (L2) gebildet ist und eine zweite metallische Schutzbeschichtung (B2) aufweist,
wobei sich die zweite Stahllegierung (L2) von der ersten Stahllegierung (L1) darin unterscheidet, dass diese beim Presshärten materialbedingt eine höhere Festigkeit ausbildet,
wobei sowohl die erste metallische Schutzbeschichtung (B1) als auch die zweite metallische Schutzbeschichtung (B2) aus einer zinkhaltigen Legierung gebildet ist, wobei die erste metallische Schutzbeschichtung (B1) eine Schichtdicke von ≥ 11 µm und die zweite metallische Schutzbeschichtung (B2) eine Schichtdicke von ≤ 10 µm aufweist;
- Erwärmen, Umformen und Presshärten oder Umformen, Erwärmen und Presshärten der Tailored Welded Blank (100), wodurch ein pressgehärtetes Blechformteil (200) erzeugt wird, das einen aus dem ersten Blechstück (110) gebildeten ersten Blechformteilbereich (210) und einen aus dem zweiten Blechstück (120) gebildeten zweiten Blechformteilbereich (220) aufweist,
wobei sich diese beiden Blechformteilbereiche (210, 220) in ihren Festigkeiten voneinander unterscheiden, derart, dass der erste Blechformteilbereich (210) eine Festigkeit von ≤ 1650 MPa und der zweite Blechformteilbereich (220) eine Festigkeit ≥ 1750 MPa aufweist, und
wobei sich diese beiden Blechformteilbereiche (210, 220) auch in ihren Korrosionsschutzeigenschaften voneinander unterscheiden.

2. Verfahren nach Anspruch 1,
**dadurch gekennzeichnet, dass**
das erste Blechstück (110) eine andere Blechdicke als das zweite Blechstück (120) aufweist.

3. Verfahren nach einem der vorhergehenden Ansprüche,
**dadurch gekennzeichnet, dass**
zwischen dem Erwärmen und Presshärten ein zumindest partielles Zwischenkühlen vorgesehen ist.

4. Verfahren nach einem der vorhergehenden Ansprüche,
**dadurch gekennzeichnet, dass**
die Tailored Welded Blank (100) durch Aufbringen wenigstens eines zusätzlichen Blechstücks lokal verstärkt wird.

5. Verfahren nach einem der vorhergehenden Ansprüche,
**dadurch gekennzeichnet, dass**
das hergestellte pressgehärtete Blechformteil (200) eine Säulen-Verstärkung für eine Karosserieseitenwand ist, wobei der erste Blechformteilbereich (210) den Säulenfuß bildet und der zweite Blechformteilbereich (220) die Säulenmitte und die Säulendachanbindung bildet.

## Claims

1. Process for producing a press-hardened formed sheet-metal part (200) having different properties from region to region, comprising the following steps:
- providing a tailored welded blank (100), comprising a first sheet-metal piece (110) which is made of a first steel alloy (L1) and has a first metallic protective coating (B1), and comprising a second sheet-metal piece (120) which is made of a second steel alloy (L2) and has a second metallic protective coating (B2),
wherein the second steel alloy (L2) differs from the first steel alloy (L1) in that during the press hardening operation the material dictates that it affords a higher strength,
wherein both the first metallic protective coating (B1) and the second metallic protective coating (B2) are made of a zinc-containing alloy, wherein the first metallic protective coating (B1) has a layer thickness of ≥ 11 um and the second metallic protective coating (B2) has a layer thickness of ≤ 10 µm;
- heating, forming and press-hardening or forming, heating and press-hardening the tailored welded blank (100), as a result of which a press-hardened formed sheet-metal part (200) having a first formed-sheet-metal-part region (210) formed from the first sheet-metal piece (110) and a second formed-sheet-metal-part region (220) formed from the second sheet-metal piece (120) is produced,
wherein the strengths of these two formed-sheet-metal-part regions (210, 220) differ from one another such that the first formed-sheet-metal-part region (210) has a strength of ≤ 1650 MPa and the second formed-sheet-metal-part region (220) has a strength of ≥ 1750 MPa, and
wherein the anti-corrosion properties of these two formed-sheet-metal-part regions (210, 220) also differ from one another.

2. Process according to Claim 1,
**characterized in that**
the first sheet-metal piece (110) has a different sheet-metal thickness than the second sheet-metal piece (120).

3. Process according to either of the preceding claims,
**characterized in that**
an at least partial intermediate cooling operation is provided between the heating operation and the press-hardening operation.

4. Process according to one of the preceding claims,
**characterized in that**
the tailored welded blank (100) is locally reinforced by applying at least one additional sheet-metal piece.

5. Process according to one of the preceding claims,
**characterized in that**
the press-hardened formed sheet-metal part (200) produced is a pillar reinforcement for a vehicle body sidewall, wherein the first formed-sheet-metal-part region (210) forms the pillar base and the second formed-sheet-metal-part region (220) forms the centre of the pillar and the pillar roof attachment.

## Revendications

1. Procédé de fabrication d'une pièce formée en tôle (200) trempée sous presse avec des propriétés différentes dans certaines zones, comprenant les étapes suivantes :
- fourniture d'une ébauche de soudure sur mesure (100), comprenant un premier morceau de tôle (110), lequel est formé à partir d'un premier alliage d'acier (L1) et présente un premier revêtement de protection (B1) métallique, et comprenant un deuxième morceau de tôle (120), lequel est formé à partir d'un deuxième alliage d'acier (L2) et présente un deuxième revêtement de protection (B2) métallique,
le deuxième alliage d'acier (L2) se différentiant du premier alliage d'acier (L1) en ce que lors de la trempe sous presse, celui-ci, en raison du matériau, forme une résistance plus élevée,
le premier revêtement de protection (B1) métallique ainsi que le deuxième revêtement de protection (B2) métallique étant formés à partir d'un alliage contenant du zinc,
le premier revêtement de protection (B1) métallique présentant une épaisseur de couche ≥ 11 µm et le deuxième revêtement de protection (B2) métallique une épaisseur de couche ≤ 10 µm ;
- réchauffage, façonnage et trempe sous presse ou façonnage, réchauffage et trempe sous presse de l'ébauche de soudure sur mesure (100), ce par quoi une pièce formée en tôle (200) trempée sous presse est produite, laquelle possède une première zone de pièce formée en tôle (210) formée à partir du premier morceau de tôle (110) et une deuxième zone de pièce formée en tôle (220) formée à partir du premier morceau de tôle (120),
ces deux zones de pièce formée en tôle (210, 220) se différentiant l'une de l'autre au niveau de leur résistance de telle sorte que la première zone de pièce formée en tôle (210) présente une résistance ≤ 1650 MPa et la deuxième zone de pièce formée en tôle (220) une résistance ≤ 1750 MPa, et
ces deux zones de pièce formée en tôle (210, 220) se différentiant l'une de l'autre au niveau de leurs propriétés de protection anticorrosion.

2. Procédé selon la revendication 1, **caractérisé en ce que** le premier morceau de tôle (110) présente une épaisseur de tôle autre que celle du deuxième morceau de tôle (120).

3. Procédé selon l'une des revendications précédentes, **caractérisé en ce qu'**un refroidissement intermédiaire au moins partiel est présent entre le réchauffage et la trempe sous presse.

4. Procédé selon l'une des revendications précédentes, **caractérisé en ce que** l'ébauche de soudure sur mesure (100) est renforcée localement par application d'au moins un morceau de tôle supplémentaire.

5. Procédé selon l'une des revendications précédentes, **caractérisé en ce que** la pièce formée en tôle (200) trempée sous presse fabriquée est un renfort de colonne pour une paroi latérale de carrosserie, la première zone de pièce formée en tôle (210) formant le pied de colonne et la deuxième zone de pièce formée en tôle (220) formant le milieu de la colonne et la connexion au toit de la colonne.
